# EUROPEAN PATENT APPLICATION

(11) **EP 4 800 991 A1**
(43) Date of publication of application: **02.09.2026**
(21) Application number: 24895515.5
(22) Date of filing: 03.06.2024
(51) Int. Cl.: H04L 41/04

(54) **MANAGEMENT METHOD, MANAGEMENT APPARATUS AND SYSTEM FOR NETWORK MANAGEMENT INTENT**

(30) Priority: 28.11.2023 CN 202311613585
(71) Applicant: Huawei Technologies Co., Ltd., Shenzhen, Guangdong 518129 (CN)
(72) Inventor: FENG, Xiaohan, Shenzhen, Guangdong 518129 (CN); LI, Yexing, Shenzhen, Guangdong 518129 (CN); XU, Ruiyue, Shenzhen, Guangdong 518129 (CN); YU, Yijun, Shenzhen, Guangdong 518129 (CN)
(74) Representative: Maiwald GmbH
(86) International application number: PCT/CN2024/097017
(87) International publication number: WO 2025/112406

(57) **Abstract**

A method and an apparatus for managing a network management intent, and a system are provided. A consumer entity may subscribe to an intent report sent by a producer entity when a stable achieved value for a target of a network management intent fails to fulfil the target of the network management intent. In this case, an achieved value that is for a target of an intent and that is indicated by the intent report received by the consumer entity always remains stable and reliable. Alternatively, the producer entity may indicate to the consumer entity, through an intent report, whether an achieved value for a target of an intent is stable. Based on the two intent reports, the consumer entity makes a decision, so that the consumer entity can select appropriate time to intervene in or manage execution of the network management intent, to help reduce a probability of incorrect determining and reduce a waste of resources.

## Description

This application claims priority to Chinese Patent Application No. 202311613585.X, filed with the China National Intellectual Property on November 28, 2023, and entitled "METHOD AND APPARATUS FOR MANAGING NETWORK MANAGEMENT INTENT, AND SYSTEM", which is incorporated herein by reference in its entirety.

### TECHNICAL FIELD

This application relates to the field of communication technologies, and more specifically, to a method and an apparatus for managing a network management intent, and a system.

### BACKGROUND

With development of network resource management, a network management service consumer entity may not directly manage network resources. The network management service consumer entity may send a message to a network management service producer entity, to enable the network management service producer entity to execute a network management intent, so as to achieve an expected objective of a specified performance indicator of a network equipment within a specific range. In this process, the network management service consumer entity may send the message to the producer entity to intervene in execution of the network management intent, including modifying the network management intent or deleting the network management intent.

However, due to incorrect determining, this management mechanism may cause a network management intent that can be originally achieved to fail to be achieved, resulting in a waste of resources.

How the network management service consumer entity selects appropriate time to intervene in or manage the execution of the network management intent is a technical problem that needs to be resolved

### SUMMARY

Embodiments of this application provide a method and an apparatus for managing a network management intent, and a system, to help a consumer entity select appropriate time to intervene in or manage execution of the network management intent, so as to reduce incorrect determining and reduce a waste of resources.

According to a first aspect, a method for managing a network management intent is provided. The method may be executed by a consumer entity. Unless otherwise specified, the "consumer entity" may be the consumer entity itself, or may be an apparatus that can support the consumer entity in implementing a function of the consumer entity.

The method includes: receiving an intent report from a producer entity, where the intent report indicates that a stable achieved value for a target of a network management intent fails to fulfil the target of the network management intent; and managing the network management intent based on the intent report.

Based on the foregoing method, the producer entity may indicate to the consumer entity that the stable achieved value for the target of the intent fails to fulfil the target of the intent. The intent report indicates the stable achieved value for the target of the intent. In comparison with a conventional technology in which the intent report only indicates an achieved value for the target of the intent, the consumer entity may learn that the achieved value for the target of the intent is stable and reliable, and may select appropriate time to intervene in or manage execution of the intent based on the stable and reliable achieved value, to reduce a probability of incorrect determining, so as to reduce a waste of resources.

With reference to the first aspect, in some possible implementations, the method further includes: sending request information to the producer entity, where the request information is used for requesting the producer entity to send the intent report.

Based on the foregoing implementation, the consumer entity may request the intent report from the producer entity. Correspondingly, the producer entity may send the intent report based on a request of the consumer entity. In comparison with that the producer entity periodically reports the intent report, this manner helps reduce signaling overheads caused by reporting the intent report.

With reference to any one of the first aspect or the implementations of the first aspect, in some other possible implementations, sending the request information to the producer entity includes: sending a subscription request message to the producer entity, where the subscription request message includes the request information.

Based on the foregoing implementation, the consumer entity may obtain the intent report from the producer entity in a subscription-based manner.

With reference to any one of the first aspect or the implementations of the first aspect, in some other possible implementations, the request information includes the network management intent or an identifier of the network management intent.

For example, the identifier of the intent is information that can uniquely determine the intent, for example, a name or a number of the intent.

With reference to any one of the first aspect or the implementations of the first aspect, in some other possible implementations, the request information includes indication information, and the indication information indicates to send the intent report when the stable achieved value for the target of the network management intent fails to fulfil the target of the network management intent.

Based on the foregoing implementation, the consumer entity may require the producer entity to send the intent report to the consumer entity when the target of the intent is not fulfilled and the achieved value for the target of the intent is stable. In this case, the achieved value that is for the target of the intent and that is indicated by the intent report received by an intent service consumer always remains stable and reliable. The consumer entity manages the intent based on the stable and reliable achieved value, to help select appropriate time to intervene in or manage execution of the intent, so as to reduce a probability of incorrect determining, to reduce a waste of resources.

In addition, the producer entity reports the intent report to the consumer entity only when the target of the intent is not fulfilled and the achieved value for the target of the intent is stable, to help reduce signaling overheads.

With reference to any one of the first aspect or the implementations of the first aspect, in some other possible implementations, the stable achieved value includes: an achieved value for the target of the network management intent upon all action groups for the network management intent having taken effect, where the action group includes one or more actions for managing a managed entity of the network management intent; or an achieved value for the target of the network management intent upon a performance indicator value of a managed entity of the network management intent remaining within a first range in first observation duration.

With reference to any one of the first aspect or the implementations of the first aspect, in some other possible implementations, the method further includes: sending first information to the producer entity, where the first information indicates the first observation duration and/or the first range, the first observation duration is observation duration needed to determine that the achieved value for the target of the network management intent is stable, and the first range is a fluctuation range that needs to be satisfied for the achieved value for the target of the network management intent to be stable.

Based on the foregoing implementation, the consumer entity may customize an indicator for measuring whether the achieved value for the target of the intent is stable, so that a stability status of the target of the intent reported by the producer entity better meets an expectation of the consumer entity, and can better assist the consumer entity in making a decision. This helps the consumer entity select appropriate time to intervene in or manage execution of the intent, to reduce a probability of incorrect determining and reduce a waste of resources.

With reference to any one of the first aspect or the implementations of the first aspect, in some other possible implementations, sending the first information to the producer entity includes: sending a creation message to the producer entity, where the creation message is used for requesting to create the network management intent. The creation message includes the network management intent, and the network management intent includes the first information, or the creation message includes the network management intent and the first information.

With reference to any one of the first aspect or the implementations of the first aspect, in some other possible implementations, managing the network management intent based on the intent report includes: sending a first request message to the producer entity, where the first request message is used for requesting the producer entity to delete the network management intent; or sending a second request message to the producer entity, where the second request message is used for requesting the producer entity to modify the network management intent, and modifying the network management intent includes one or more of the following operations: reducing an expected value for an unfulfilled target of the network management intent, changing an action group for the network management intent, or increasing a priority of the network management intent.

With reference to any one of the first aspect or the implementations of the first aspect, in some other possible implementations, sending the first request message to the producer entity includes: sending the first request message to the producer entity when a difference between the achieved value for the target of the network management intent and the expected value for the target of the network management intent is greater than a first threshold; or sending the second request message to the producer entity includes: sending the second request message to the producer entity when a difference between the achieved value for the target of the network management intent and the expected value for the target of the network management intent is less than or equal to a first threshold.

According to a second aspect, a method for managing a network management intent is provided. The method may be executed by a producer entity. Unless otherwise specified, the "producer entity" may be the producer entity itself, or may be an apparatus that can support the producer entity in implementing a function of the producer entity.

For terms or features that are in the second aspect or the implementations of the second aspect and that are the same as those in the first aspect or the implementations of the first aspect, refer to the first aspect or the implementations of the first aspect. For technical effects of the second aspect or the implementations of the second aspect, refer to the technical effects in the first aspect or the implementations of the first aspect. Details are not described in the second aspect.

The method includes: monitoring an achieved value for a target of a network management intent; and sending an intent report to a consumer entity, where the intent report indicates that a stable achieved value for the target of the network management intent fails to fulfil the target of the network management intent.

With reference to the second aspect, in some possible implementations, the method further includes: receiving request information from the consumer entity, where the request information is used for requesting the intent report.

With reference to any one of the second aspect or the implementations of the second aspect, in some other possible implementations, receiving the request information from the consumer entity includes: receiving a subscription request message from the consumer entity, where the subscription request message includes the request information.

With reference to any one of the second aspect or the implementations of the second aspect, in some other possible implementations, the request information includes the network management intent or an identifier of the network management intent.

With reference to any one of the second aspect or the implementations of the second aspect, in some other possible implementations, the request information includes indication information, and the indication information indicates to send the intent report when the stable achieved value for the target of the network management intent fails to fulfil the target of the network management intent.

With reference to any one of the second aspect or the implementations of the second aspect, in some other possible implementations, the method further includes: determining that the achieved value for the target of the network management intent is stable.

With reference to any one of the second aspect or the implementations of the second aspect, in some other possible implementations, determining that the achieved value for the target of the network management intent is stable includes: determining that all action groups for the network management intent have taken effect, where the action group includes one or more actions for managing a managed entity of the network management intent; or determining that a performance indicator value of a managed entity of the network management intent remains within a first range in first observation duration.

With reference to any one of the second aspect or the implementations of the second aspect, in some other possible implementations, the method further includes: receiving first information from the consumer entity, where the first information indicates the first observation duration and/or the first range, the first observation duration is observation duration needed to determine that the achieved value for the target of the network management intent is stable, and the first range is a fluctuation range that needs to be satisfied for the achieved value for the target of the network management intent to be stable.

With reference to any one of the second aspect or the implementations of the second aspect, in some other possible implementations, receiving the first information from the consumer entity includes: receiving a creation message from the consumer entity, where the creation message is used for requesting to create the network management intent. The creation message includes the network management intent, and the network management intent includes the first information, or the creation message includes the network management intent and the first information.

With reference to any one of the second aspect or the implementations of the second aspect, in some other possible implementations, the method further includes: receiving a first request message from the consumer entity, where the first request message is used for requesting the producer entity to delete the network management intent; and deleting the network management intent based on the first request message; or receiving a second request message from the consumer entity, where the second request message is used for requesting the producer entity to modify the network management intent; and modifying the network management intent based on the second request message, where modifying the network management intent includes one or more of the following operations: reducing an expected value for an unfulfilled target of the network management intent, changing an action group for the network management intent, or increasing a priority of the network management intent.

According to a third aspect, a method for managing a network management intent is provided. The method may be executed by a producer entity and a consumer entity. Unless otherwise specified, the "producer entity" or the "consumer entity" may be the producer entity itself or the consumer entity itself, or may be an apparatus that can support the producer entity or the consumer entity in implementing a function of the producer entity or the consumer entity.

The method includes: The producer entity monitors an achieved value for a target of a network management intent; the producer entity sends an intent report, and the consumer entity receives the intent report, where the intent report indicates that a stable achieved value for the target of the network management intent fails to fulfil the target of the network management intent; and the consumer entity manages the network management intent based on the intent report.

For steps performed by the consumer entity in the third aspect or the implementations of the third aspect, refer to the first aspect or the implementations of the first aspect. For steps performed by the producer entity in the third aspect or the implementations of the third aspect, refer to the second aspect or the implementations of the second aspect. For terms or features that are the same as those in the first aspect or the implementations of the first aspect, refer to the first aspect or the implementations of the first aspect. For technical effects of the third aspect or the implementations of the third aspect, refer to technical effects of the first aspect or the implementations of the first aspect. Details are not described in the third aspect.

According to a fourth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit. The processing unit is configured to perform processing steps in the method provided in any one of the foregoing aspects or the implementations of the foregoing aspect, for example, managing a network management intent. The transceiver unit is configured to perform receiving and sending steps in the method provided in any one of the foregoing aspects or the implementations thereof, for example, receiving or sending an intent report, first information, or a subscription message.

In an implementation, the apparatus is a producer entity or a consumer entity. When the apparatus is the producer entity or the consumer entity, the transceiver unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the producer entity or the consumer entity. When the apparatus is the chip, the chip system, or the circuit used in the producer entity or the consumer entity, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a producer entity or a consumer entity.

In another implementation, the apparatus is a chip, a chip system, or a circuit used in the producer entity or the consumer entity.

According to a sixth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a seventh aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eighth aspect, a computer-readable storage medium is provided. The computer-readable storage medium stores program code to be executed by a device, and the program code is used for performing the method provided in any one of the foregoing aspects or the implementations of the foregoing aspects.

According to a ninth aspect, a computer program product including instructions is provided. When the computer program product runs on a computer, the computer is enabled to perform the method provided in any one of the foregoing aspects or the implementations of the foregoing aspects.

According to a tenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to an eleventh aspect, a communication system is provided, including at least one of the foregoing producer entity or consumer entity.

According to a twelfth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a structure of an intent information object class (information object class, IOC);
FIG. 2 is a diagram of a structure of a communication system to which an embodiment of this application is applicable;
FIG. 3 shows an example of impact of intervention of a consumer entity on achievement of an intent;
FIG. 4 is a schematic flowchart of a method 400 for managing a network management intent according to an embodiment of this application;
FIG. 5 is a schematic flowchart of a method 500 for managing a network management intent according to an embodiment of this application;
FIG. 6 is a schematic flowchart of a method 600 for managing a network management intent according to an embodiment of this application;
FIG. 7 is a schematic flowchart of a method 700 for managing a network management intent according to an embodiment of this application;
FIG. 8 is a schematic flowchart of a method 800 for managing a network management intent according to an embodiment of this application;
FIG. 9 is a schematic flowchart of a method 900 for managing a network management intent according to an embodiment of this application;
FIG. 10 is a diagram of a structure of an apparatus according to an embodiment of this application;
FIG. 11 is a diagram of another structure of an apparatus according to an embodiment of this application; and
FIG. 12 is a diagram of a chip system according to an embodiment of this application.

### DESCRIPTION OF EMBODIMENTS

Before embodiments of this application are described, the following description is first provided.

"Indicating" or "indicate" may include direct indicating and indirect indicating, or "indicating" or "indicate" may be explicitly and/or implicitly indicating. First, second, and the like numbers are merely used for differentiation for ease of description, and are not used to limit the scope of embodiments of this application, for example, to distinguish between different messages and different information. "Predefinition" may be implemented by prestoring, in a device, corresponding code, a table, or another manner that may indicate related information. A specific implementation is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "exemplary", "for example", "example", and "in an (another) example" are used to represent giving an example, an illustration, or a description. Any embodiment or design scheme described as an "example" in this application should not be explained as being more preferred or having more advantages than another embodiment or design scheme. The terms "include", "have", and their variants all mean "include but are not limited to", unless otherwise specifically emphasized in another manner. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent via another network element is not limited. Descriptions such as "when...", "upon...", and "if" all mean that a device performs corresponding processing in an objective case, and are not limited to time, and the device is not required to perform a determining action during implementation. This does not mean that there is another limitation.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions in this application may be applied to various network function virtualization (network function virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For ease of understanding embodiments of this application, some terms in embodiments of this application are first explained.

### 1. Network management, network management service, network management service producer entity, and network management service consumer entity

### 1.1 Network management

The network management refers to managing a network resource, including but not limited to monitoring, controlling, and recording performance and usage of the network resource, and delivering a management action group to the network resource (such as a device in a network) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in time, a network system can be coordinated and maintained to run efficiently, and the like. The network resource is an object to which the network management is applied, and may also be referred to as a network object or a managed entity. For example, the network resource may be a base station device, a router, a switch, a core network device, or the like. This is not particularly limited in embodiments of this application. For ease of description, the managed entity is used as an example for description in embodiments of this application, but may be replaced with another object to which the network management is applied.

### 1.2 Network management service

The network management service is a service that provides a network management function. A producer entity of the service usually provides the network management function for a consumer entity of the service through a network interface (for example, a service based interface, service based interface).

### 1.3 Network management service producer entity

An entity that provides the network management service is referred to as the network management service producer entity. For example, a capability or a function of the network management service producer entity may be deployed on a network element, and the network element is referred to as a network management service production network element. Alternatively, a capability or a function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

### 1.4 Network management service consumer entity

An entity that invokes the network management service is referred to as the network management service consumer entity. For example, a capability or a function of the network management service consumer entity may be deployed on a network element, and the network element is referred to as a network management service consumption network element. Alternatively, a capability or a function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

### 2. Network management intent (intent for short)

The network management intent is a requirement of the network management service consumer entity for the network management service, and may also be referred to as a network management service requirement. This name is not limited in embodiments of this application. For example, the network management intent may be an intent like an optical private line service intent or an energy saving intent, for example, an intent (intent) defined in a 3rd generation partnership project (3rd generation partnership project, 3GPP) standard specification 28.312.

In an intent based interaction scenario of this application, two roles are mainly included, which are respectively a network management provision entity and the network management service consumer entity. The network management provision entity may also be referred to as a network management provider, an intent provider (intent provider), an intent handler (intent handler), or the like. The network management service consumer entity may also be referred to as a network management service consumer, an intent consumer (intent consumer), an intent owner (intent owner), or the like.

The network management service consumer entity may be an invoker of the network management service, and may perform operations such as creating, modifying, deleting, and querying for a network management intent expression. The network management service consumer entity may be configured in a network management system (network management system, NMS), an element management system (element management system, EMS), or a network equipment (network equipment, NE), and may be a management function, a management function entity, a management entity, a network equipment, a network element, or the like. This is not limited in this application.

The intent may be applied to the network system, to achieve an expected objective of a specified performance indicator of the network equipment within a specific range. The intent may express an expectation for the network system by using a formal specification and description information. The formal specification may refer to intent-specific syntax or semantics, and the description information may be used for describing a requirement, a target, and a constraint of the intent.

An intent may include at least one intent expectation. Each intent expectation may represent a performance requirement of the network management service consumer entity for a specific network object. An intent expectation may include at least one expectation target and an expectation object, and each expectation target may represent a performance requirement of the network management service consumer entity for a specific attribute of the expectation object. For example, the intent expectation may include two expectation targets. One expectation target is that an average downlink throughput is greater than 5 Mbps, and the other expectation target is that an end-to-end delay is less than 10 milliseconds. If an average downlink throughput of the expectation object is greater than 5 Mbps, the expectation target for the downlink throughput is satisfied. If an end-to-end delay of the expectation object is less than 10 milliseconds, the expectation target for the delay is satisfied. If both the two expectation targets of the intent expectation are satisfied, the intent expectation is satisfied. If one or more intent expectations are not satisfied or one or more expectation targets are not satisfied, the intent is not satisfied. In embodiments of this application, that an intent, an intent expectation, or an expectation target is satisfied or not satisfied may also be described as follows: The intent, the intent expectation, or the expectation target is fulfilled or not fulfilled, the intent, the intent expectation, or the expectation target is achieved or not achieved, or the like. The following uses a manner of "the intent, the intent expectation, or the expectation target is fulfilled or not fulfilled" for description.

The intent may also include an intent context. The intent context may represent a constraint or a condition of the network management service consumer entity on the intent. For example, the network management service consumer entity may constrain action duration of the intent by using the intent context.

The intent may also include an expectation context. The expectation context may represent a constraint or a condition of the network management service consumer entity on an intent expectation. For example, the network management service consumer entity may constrain action duration of the intent expectation by using the expectation context.

The intent may also include a target context. The target context may represent a constraint or a condition of the network management service consumer entity on an expectation target. For example, the network management service consumer entity may constrain action duration of the expectation target by using the target context.

The intent may also include an object context. The object context may represent a constraint or a condition of the network management service consumer entity on a network object to which the intent is applied. For example, the network management service consumer entity may indicate, by using the object context, an area in which the network object to which the intent is applied is located.

The intent expectation, the expectation target, and the intent context described above may be used as information elements in an IOC in an intent creation request. The network management service consumer entity may express a requirement for the network management service by sending the information elements to the network management service producer entity.

For the information element in the intent IOC, a specific structure may be used to express a requirement for the network management service.

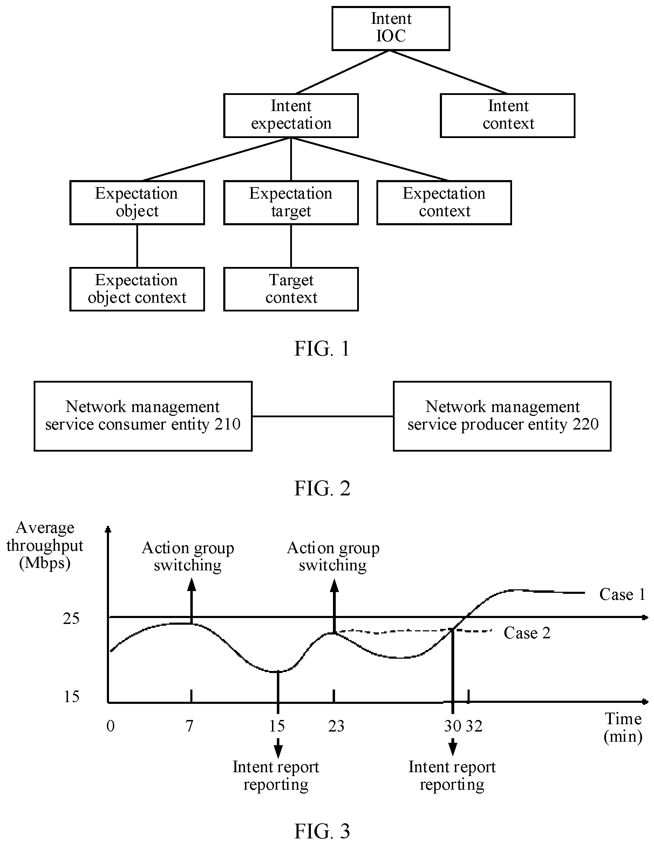

For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that an information element of a non-context type (for example, an intent IOC, an intent expectation, an expectation object, or an expectation target) may include an information element of a context type (for example, an intent context, an expectation object context, a target context, or an expectation context), and the information element of the context type can be used to constrain the information element of the non-context type.

It may be understood that FIG. 1 is an example of a relationship between attributes in the intent IOC. Based on a network management service requirement, the intent IOC may further include another attribute. This is not particularly limited in this application. It may be further understood that a quantity of attributes of a same type is not specially limited in this application. For example, an intent IOC may include one or more parallel intent expectation attributes, and an intent expectation may also include one or more parallel expectation target attributes.

### 3. Network management intent template

The network management intent template is template description information of the network management intent, and may also be referred to as a network management service requirement template. This name is not limited in embodiments of this application. The intent template may be used for specifying syntax and semantics for expressing various attributes described above. For example, the intent template may specify a field type, a value type, or the like that may be used for each attribute in the IOC. In an example, the intent template may include intent expectation description information that is used for specifying how an intent expectation is expressed. The intent expectation description information may specify a type of an expectation target attribute that may be included in the intent expectation, for example, a delay, bandwidth, and a maximum quantity of users. The intent expectation description information may further specify a field type of each expectation target. For example, a field type of an expectation target for a delay is character string, a field type of an expectation target for bandwidth is character string, and a field type of an expectation target for a maximum quantity of users is integer. In another example, the intent template may further include intent context description information that specifies how the intent context and the expectation context are expressed. The intent context description information may be used for specifying a field type of the intent context, and the like. This is not particularly limited in this application.

### 4. Intent expression

In embodiments of this application, the intent expression is an information expression for expressing a network management service intent, and may be an instantiation result of the network management intent template. A consumer of the network management intent can instantiate the intent IOC based on the intent template to generate the intent expression, and the intent expression generated through the instantiation can be used for a specific network service. For example, the intent expression may be represented by a list of a set of key-value pair of attribute and value (for example, a set of [attribute, value]) of the network management service intent.

For example, the intent expression includes a performance indicator information instance, a network object information instance, and a context information instance.

For example, the performance indicator information instance may include a value or a value range of a target indicator requirement corresponding to performance indicator information. For example, the target indicator requirement corresponding to a performance indicator information template includes a bandwidth parameter, and the performance indicator information instance includes that a value of the bandwidth parameter is 20 M, or a value range of the bandwidth parameter is 10 M to 15 M. For example, the target indicator requirement corresponding to a performance indicator information template includes a delay parameter, and a delay parameter instance includes that a value of the delay parameter is 2s, or a value range of the delay parameter is 1s to 5s.

A target network object indicated by the network object information instance is an instantiation result of the target network object indicated by a network object information template. For example, the target network object indicated by the network object information instance is one of target network objects indicated by the network object information template, in other words, indicates one of a physical entity or a logical entity that implements the network management service. In this case, the network object information instance indicates a specific network object. For example, the network object information template indicates a network service, and the network object information instance indicates an energy saving service.

The context information instance indicates a constraint condition of the network management intent expression. For example, the context information instance includes a constraint parameter of the network management intent expression. For example, the context information instance may include information about a source end and a sink end corresponding to a target network object indicated by a network object instance, and the like.

An intent expectation information instance includes the performance indicator information instance and the network object information instance.

In embodiments of this application, an "intent" transmitted by using a message is the intent expression.

### 5. Network management intent instance

The network management intent instance is a network management intent processing process locally created by a network management service provision entity based on a received network management intent expression (for example, the performance indicator information instance, the network object information instance, or the context information instance).

The network management intent processing process is used for processing the network management intent expression. For example, the network management intent processing process may include an identifier, and the identifier is used for identifying the process. The network management intent processing process may include a computing resource, and the computing resource is used for performing operations such as network management intent translation and database (for example, a semantic knowledge base) query. The network management intent processing process may include a storage resource, and the storage resource is used for storing the network management intent expression, a network management intent translation result, and the like.

The network management intent translation is used for converting the network management intent expression into a corresponding management action group. The management action group may be instructions that are applied to a physical entity or a logical entity, for example, adjusting an antenna tilt angle of a base station or turning on an energy saving switch of a cell.

### 6. Network management action group (actions)

The network management action group is one or more network management actions generated by the network management service producer entity based on the intent expression, and the network management service producer entity fulfills an intent of the network management service consumer entity by executing the one or more network management actions. The network management action group may also be referred to as a management operation or an intent operation. The network management action group may be an operation instruction set for the expectation object (for example, a physical entity or a logical entity to which the intent is applied and that is in the network system), and includes one or more instructions, for example, adjusting an antenna tilt angle of a base station or turning on an energy saving switch of a cell.

The network management service producer entity may generate a plurality of management action groups based on the intent expression. In an execution process, the network management service producer entity may select a part of management action groups from the plurality of management action groups at a time for execution. In other words, the management action group generated by the network management service producer entity based on translation of the intent expression is an optional operation that can be used for fulfilling the intent. The network management service producer entity may select one of the network management action groups for execution to fulfil the intent, or may select a network management action group for a plurality of times for execution to fulfil the intent.

### 7. Intent report

The intent report is used for describing intent report information from the network management service producer entity to the network management service consumer entity. Based on the intent report, the network management service producer entity may provide the network management service consumer entity with some information related to the intent, for example, information that needs to be monitored by the network management service consumer entity.

An intent report IOC may include one or more of an intent fulfilment report (IntentFulfilmentReport), an intent conflict report (IntentConflictReport), or an intent feasibility check report (IntentFeasibilityCheckReport).

The intent fulfilment report, which may also be referred to as an intent satisfaction report, an intent achievement report, intent achievement information, or the like, is used for describing an assessment of an extent to which a specific aspect of the intent of the network management service producer entity is fulfilled. The intent fulfilment report may include fulfilment information of a specific aspect of the intent, the fulfilment information is used for describing a fulfilment status of the specific aspect, and the fulfilment status may be fulfilled or not fulfilled. The specific aspect may include one or more of an intent, an intent expectation, and an expectation target. To be specific, the intent fulfilment report may include one or more of fulfilment information of an intent (intentFulfilmentinfo), intent expectation fulfilment information (expectationfulfilmentInfo) of the intent, or expectation target fulfilment information (targetfulfilmentInfo) of the intent. For example, the intent fulfilment report includes only the fulfilment information of the intent. For another example, the intent fulfilment report includes only the expectation target fulfilment information of the intent. For another example, the intent fulfilment report includes the fulfilment information of the intent, the intent expectation fulfilment information of the intent, and the expectation target fulfilment information of the intent. For example, the intent includes an intent expectation, and the intent expectation may include an expectation target A and an expectation target B. The expectation target A is fulfilled, and the expectation target B is not fulfilled. In the intent fulfilment report, a fulfilment status of the intent is not fulfilled, a fulfilment status of the intent expectation is not fulfilled, a fulfilment status of the expectation target A is fulfilled, and a fulfilment status of the expectation target B is not fulfilled. The intent fulfilment report may also include an achieved value for the expectation target and an optional predicted value for the expectation target. The achieved value for the expectation target is used for describing a current value for the expectation target. The predicted value for the expectation target is used for describing a final achieved value that is for the expectation target and that is assessed by the network management service producer entity. Optionally, when the fulfilment status is not fulfilled, the intent fulfilment report may further include a specific unfulfilled state. The specific unfulfilled state may indicate a stage at which the fulfilment status is located, for example, a stage at which the intent is just created, a stage at which the intent is suspended due to a conflict, or a stage at which an action group corresponding to the intent is executed.

The intent conflict report may also be referred to as intent conflict information, and is used for describing detected intent conflict information. The intent conflict information includes a conflict type and a possible conflict resolution. A conflict type includes but is not limited to the following types: a conflict between different intents (that is, an intent conflict), a conflict between different intent expectations of a same intent (that is, an expectation conflict), or a conflict between different expectation targets of a same intent (that is, a target conflict).

The intent feasibility check report may also be referred to as intent feasibility check information, and indicates whether the intent is feasible or not. After receiving an intent creation request or an intent modification request from the network management service consumer entity, the network management service producer entity may automatically perform intent feasibility check, to obtain the intent feasibility check report.

The network management service consumer entity may obtain the intent report from the network management service producer entity through query or subscription. For example, the network management service consumer entity may query the intent report through a "getMOIAttributeValue" operation to obtain the intent report. For another example, the network management service consumer entity may subscribe to a "notifyMOIAttributeValueChanges" notification to obtain the intent report.

### 8. Intent report template

The intent report template is template description information of the intent report, and is used for specifying syntax and semantics of an intent report expression. For example, the intent report template may specify a field type, a value type, or the like that may be used for each attribute in the intent report IOC. In an example, the intent report template may include one or more of intent fulfilment description information used for specifying how the intent fulfilment report is expressed, intent conflict description information used for specifying how the intent conflict report is expressed, and intent feasibility check description information used for specifying how the intent feasibility check report is expressed. The intent fulfilment description information may describe a field type, a value type, or the like that may be used for each attribute included in the intent fulfilment report. For example, a type of a fulfilment information attribute includes fulfilment information of an intent, intent expectation fulfilment information, and expectation target fulfilment information, an optional value of the fulfilment information is fulfilled or not fulfilled, and the value type is integer. For another example, a type of the expectation target attribute includes throughput, and a value type of an achieved value for the throughput is integer. The intent conflict description information indicates how the intent conflict report is represented, for example, an optional attribute and a type of each intent conflict field. For example, the optional attribute of the intent conflict report is conflict type, and the conflict type includes an intent conflict, an expectation conflict, and a target conflict. The intent feasibility check description information indicates how the intent feasibility check report is represented.

### 9. Intent report expression

The intent report expression is an information expression that expresses a network management service intent report, and may be an instantiation result of the intent report template. The intent report expression includes a requirement of the network management service consumer entity for monitoring an intent and reflects report information of a current intent fulfilment status. The network management service producer entity may instantiate the intent report IOC based on the intent report template to generate the intent report expression. For example, the intent report expression includes fulfilment information of a current intent and an achieved value for an expectation target. For example, the expectation target of the intent is that a throughput is greater than 10 Mbps. Based on the current intent fulfilment status, the network management service producer entity reports the fulfilment information of the intent as: fulfilled, with the achieved value for the expectation target being 12 Mbps.

### 10. Intent report instance

The intent report instance is an intent report processing process created locally by the network management service producer entity based on the intent report expression. The intent report instance may be automatically created when the network management service producer entity creates the network management intent. When the network management service producer entity deletes the network management intent based on a request of the network management service consumer entity, the intent report instance corresponding to the network management intent is also deleted. The intent report instance is not created or deleted by the network management service consumer entity.

The foregoing describes related terms in embodiments of this application. The following describes, with reference to FIG. 2, an application scenario to which embodiments of this application are applicable.

FIG. 2 is a diagram of a structure of a communication system to which an embodiment of this application is applicable. An apparatus that may be used in the communication system is first described.
1. A network management service consumer entity 210 may be configured to invoke a management service or invoke an intent service to manage a network system. For example, the network management service consumer entity 210 may instantiate an intent template, set an intent IOC, to generate an intent expression, and send the intent expression to a network management service production network element 220 to achieve an expectation for the network system.
   The network management service consumer entity 210 may also be referred to as a network management service consumption network element, a network management service consumer, an intent management service consumer (intent management service consumer), an intent service consumer, an intent consumer (intent consumer), an intent owner (intent owner), or the like. In a future communication system, the network management service consumer entity may also have another name. This is not specifically limited in this application.
2. A network management service producer entity 220 may be configured to provide the management service. For example, the network management service producer entity 220 may receive the intent expression from the network management service consumer entity 210, and perform, based on the intent expression, procedures of intent translation, intent management, and intent execution and maintenance.

The network management service producer entity 220 may also be referred to as a network management service production network element, an intent management service provider (intent management service provider), an intent service provider, a network management service producer, an intent provider (intent provider), an intent handler (intent handler), or the like. In a future communication system, the network management service producer entity may also have another name. This is not particularly limited in this application.

The foregoing entities may be network elements in a hardware device, or may be software functions running on dedicated hardware, or may be virtualization functions instantiated on a platform (for example, a cloud platform). It may be understood that the foregoing entities may be implemented by one device, or may be implemented by a plurality of devices together. In addition, the foregoing entities may alternatively be functional modules in a system, for example, functional modules in a network management system (network management system, NMS), an equipment management system (equipment management system, EMS), or a device, for example, one or more functional modules in a network equipment (network equipment, NE). The network equipment may be a base station or a core network element.

In an example, the network management service consumer entity 210 may be deployed in an NMS, the network management service producer entity 220 may be deployed in different EMSs, and interaction between the network management service consumer entity 210 and the network management service producer entity 220 may be performed through an interface between the NMS and the EMS for information exchange.

In another example, the network management service consumer entity 210 may be deployed in an EMS, the network management service producer entity 220 may be deployed in different NEs, and interaction between the network management service consumer entity 210 and the network management service producer entity 220 may be performed through an interface between the NE and the EMS for information exchange.

Optionally, the communication system may further include another device or network element, for example, a knowledge base or a digital twin system.

The solutions in this application may be further applied to another system including a corresponding entity. This is not limited in this application, and is not specifically limited in this embodiment of this application.

For ease of description, a network management intent is referred to as an intent, a network management service consumer entity is referred to as a consumer entity, a network management service producer entity is referred to as a producer entity, and an expectation target is referred to as a target.

Currently, the consumer entity may send a message to the producer entity to implement a management operation like intent creation, deletion, modification, or query in an intent life cycle. When the consumer entity receives an intent report that is from the producer entity and that indicates that the intent is not fulfilled, the consumer entity may intervene in execution of the intent based on an achieved value for the target in the intent report, for example, may perform the following operations:
1. When the achieved value for the target of the intent is close to an expected value for the target, request the producer entity to modify the intent, for example, reduce the target of the intent or modify a priority of the intent.
2. When the achieved value for the target of the intent differs greatly from an expected value for the target, request the producer entity to delete the intent.

The expected value for the target, that is, a target value, is a value that the consumer entity expects that a performance indicator related to the target can reach.

For example, the target of the intent is to ensure that an average downlink throughput is greater than 25 Mbps, and a reporting period for the intent report is 15 minutes (min). If an intent conflict occurs during execution of the intent, the consumer entity receives the intent report at the end of the reporting period. Fulfilment information of the intent in the intent report is not fulfilled, and a specific achieved value for the target of the intent is 23 Mbps. Because the achieved value for the target of the intent is close to the expected value for the target of the intent, the consumer entity may request to modify the priority of the intent.

However, intervention of the consumer entity may cause the intent that can be originally achieved to fail to be achieved, resulting in a waste of resources. The reasons are as follows:
1. The consumer entity has low tolerance for an unachieved intent. After receiving an intent report reporting that the intent is not achieved, the consumer entity may intervene in execution of the intent too early. As a result, the intent that can be originally achieved is deleted or modified.
2. The achieved value for the target of the intent is dynamic. The achieved value for the target in the intent report may not reflect an actual situation of the intent. An operation performed by the consumer entity based on the achieved value for the target may cause the intent that can be originally achieved to be deleted or modified.

FIG. 3 shows an example of impact of intervention of a consumer entity on achievement of an intent.

In the example shown in FIG. 3, a target of the intent is to ensure that an average downlink throughput is greater than 25 Mbps, and a reporting period for an intent report is 15 min. If an intent conflict occurs during execution of the intent, the producer entity reports an intent report for the first time at a 15^{th} min. A result reported in the intent report is that the intent is not fulfilled, an achieved value for the target of the intent is 18 Mbps, and the achieved value differs greatly from an expected value for the target. The producer entity reports an intent report for the second time at a 30^{th} min. A result reported in the intent report is that the intent is not fulfilled, an achieved value for the target of the intent is 22 Mbps, and the achieved value is close to the expected value for the target.

If the consumer entity intervenes when receiving the intent report for the first time, because the achieved value for the target differs greatly from the expected value for the target, the consumer entity may choose to delete the intent. If the consumer entity accesses when receiving the intent report for the second time, because the achieved value for the target is close to the expected value for the target, the consumer entity may choose to modify the intent, for example, modify the expected value for the target of the intent.

FIG. 3 shows Case 1 and Case 2 of intent achievement, and Case 1 and Case 2 are different from each other after 23 min.

Shown as a solid line part after 23 min, Case 1 shows an achievement status of the intent without intervention of the consumer entity. It can be learned that, if the consumer entity does not intervene, the intent can be achieved through natural execution. In this way, regardless of whether the consumer entity accesses after receiving the report for the first time or accesses after receiving the intent report for the second time, the intent that can be originally achieved is caused to fail to be achieved, resulting in a waste of resources.

Shown as a dotted line part after 23 min, Case 2 represents that the intent cannot be fulfilled through natural execution. However, the intent can be fulfilled by modifying the expected value for the target of the intent based on an achieved value shown at the dotted line part. However, if the consumer entity intervenes when receiving the intent report for the first time and chooses to delete the intent, the intent that can be originally achieved after the consumer entity intervenes is caused to fail to be fulfilled, resulting in a waste of resources.

With reference to the foregoing Case 1 and Case 2, it can be learned that a current intent management mechanism may finally cause, due to incorrect determining, an intent that can be originally achieved to fail to be achieved, resulting in a waste of resources. For the consumer entity, how to select appropriate time to intervene in or manage execution of the intent is a technical problem that needs to be resolved.

For the foregoing problem, this application provides a method for managing a network management intent, and a system, to reduce a probability of incorrect determining made by a consumer entity, so that the consumer entity selects appropriate time to intervene in or manage execution of an intent, to reduce a waste of resources.

The following describes method embodiments of this application.

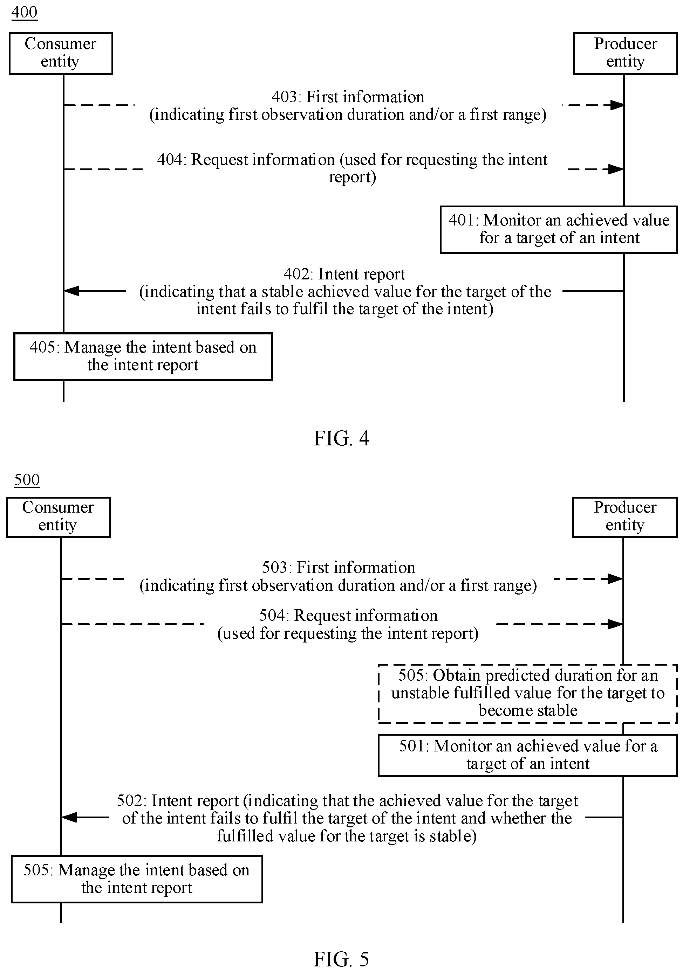

FIG. 4 is a schematic flowchart of a method 400 for managing a network management intent according to this application.

The method shown in FIG. 4 may be executed by a producer entity and a consumer entity. Unless otherwise specified, the "producer entity" or the "consumer entity" may be the producer entity itself or the consumer entity itself, or may be an apparatus that can support the producer entity or the consumer entity in implementing a function of the producer entity or the consumer entity. For ease of description, the following uses the producer entity and the consumer entity for description. The method 400 may include at least a part of the following content.

Step 401: The producer entity monitors an achieved value for a target of the intent.

The intent may be of various types. A type of the intent may be related to the target included in the intent. For example, the target of the intent includes that a performance indicator value reaches a corresponding performance indicator range. When a performance indicator is a throughput indicator, for example, an average downlink throughput is greater than or equal to 5 Mbps, the intent may be referred to as a throughput intent. When a performance indicator is an energy saving indicator, for example, saved energy is greater than or equal to 10 kilowatts, the intent may be referred to as an energy saving intent.

The achieved value for the target of the intent may also be referred to as a fulfilled value, a current value, or the like, and corresponds to an intent report. An achieved value that is for a target and that is carried in an intent report is an achieved value for the target when the intent report is generated. The achieved value for the target of the intent is related to a performance indicator value of a managed entity of the intent. A relationship between the achieved value for the target of the intent and the performance indicator value of the managed entity of the intent may be: The producer entity may continuously collect a performance indicator value related to the target at the managed entity, but only a performance indicator value when the intent report is to be sent is the achieved value for the target, and the intent report carries the performance indicator value (that is, the achieved value for the target). Another relationship between the achieved value for the target of the intent and the performance indicator value of the managed entity of the intent may be: The achieved value for the target is obtained by observing and calculating a performance indicator value that is of the managed entity and that is related to the target within a period of time.

That the producer entity monitors the achieved value for the target of the intent may also be described as: The producer entity monitors, assesses, or detects the achieved value for the target of the intent, or the like. That the producer entity monitors the achieved value for the target of the intent may be understood as: The producer entity continuously collects or samples a performance indicator value related to the target at the managed entity of the intent, and obtains the achieved value for the target based on the collected or sampled performance indicator value.

Step 402: The producer entity sends the intent report to the consumer entity, and accordingly, the consumer entity receives the intent report from the producer entity.

The intent report indicates that a stable achieved value for the target of the intent fails to fulfil the target of the intent.

The stable achieved value for the target of the intent may indicate that the achieved value for the target of the intent is stable. If the performance indicator value related to the target of the intent remains within a predetermined range within predetermined time, the achieved value for the target of the intent is stable. Otherwise, the achieved value for the target of the intent is unstable. The stable achieved value for the target of the intent may be considered reliable, credible, or available.

The stable achieved value for the target of the intent may include: an achieved value for the target of the intent upon all action groups for the intent having taken effect, and/or an achieved value for the target of the intent upon the performance indicator value of the managed entity of the intent remaining within a first range in first observation duration. For descriptions of the action group, refer to the term explanation part. The first observation duration is observation duration needed to determine that the achieved value for the target of the intent is stable, and the first range is a fluctuation range that needs to be satisfied for the achieved value for the target of the intent to be stable, or a fluctuation range needed to be satisfied to determine that the achieved value for the target of the intent is stable. That all the action groups for the intent have taken effect may be replaced with: A last action group for the intent has taken effect.

The producer entity may further determine whether the achieved value for the target of the intent is stable. A specific implementation is not limited in embodiments of this application.

In a possible implementation, the producer entity may determine whether all the action groups for the intent have taken effect. When all the action groups for the intent have taken effect, the achieved value for the target of the intent is stable. Otherwise, the achieved value for the target of the intent is unstable. In other words, the producer entity may determine, depending on whether all the action groups for the intent are executed and whether all the action groups take effect, whether the achieved value for the target of the intent is stable. For example, to ensure smooth running of an important video conference, high definition and smoothness of the video conference need to be ensured. A target 1 of a performance assurance intent is to ensure that a throughput is greater than 25 Mbps. There are two action groups for the performance assurance intent. Before the two action groups are executed and take effect, a related performance indicator value of the target 1 keeps changing. Therefore, an achieved value for the target 1 is in an unstable state. After the two action groups are executed, because no new action group is executed, the related performance indicator value of the target 1 gradually becomes stable. After a period of time (in other words, after the action groups take effect), the related performance indicator value of the target 1 becomes stable, in other words, the achieved value for the target 1 is stable.

There are a plurality of manners for determining whether the action group for the intent has taken effect. For example, the producer entity may determine, by determining whether the performance indicator value of the managed entity of the intent remains within the first range in the first observation duration, whether the action group for the intent has taken effect. For example, if the performance indicator value related to the intent remains within the first range in the first observation duration, the producer entity determines that the action group for the intent has taken effect. Otherwise, the producer entity determines that the action group for the intent has not taken effect.

In another possible implementation, the producer entity may determine whether the performance indicator value of the managed entity of the intent remains within the first range in the first observation duration. When the performance indicator value of the managed entity of the intent remains within the first range in the first observation duration, the achieved value for the target of the intent is stable. Otherwise, the achieved value for the target of the intent is unstable. For example, to ensure smooth running of an important video conference, high definition and smoothness of the video conference need to be ensured. A target 1 of a performance assurance intent is to ensure that a throughput is greater than 25 Mbps, first observation duration is 3 min, and a first range is 10%. If a fluctuation of a performance indicator related to the target 1 remains within a range of 10% in the first observation duration, an achieved value for the target 1 is stable. For another example, an energy saving intent includes a target 2, the target 2 is to ensure that energy consumption is less than 1000 kW, first observation duration is 10 min, and a first range is 5%. If a fluctuation of a performance indicator value related to the target 2 remains within a range of 5% in the first observation duration, an achieved value for the target 2 is stable.

It should be noted that when the intent includes a plurality of targets, each target may correspond to first observation duration and a first range, and first observation duration and/or first ranges corresponding to different targets may be the same or may be different. For example, a performance assurance intent includes a target 1 and a target 2. The target 1 is to ensure that a throughput is greater than 25 Mbps, the target 2 is to ensure that a delay is less than 10 ms, first observation duration corresponding to the target 1 is 3 min and a first range corresponding to the target 1 is 10%, and first observation duration corresponding to the target 2 is 5 min and a first range corresponding to the target 2 is 8%. For another example, a performance assurance intent includes a target 1 and a target 2. The target 1 is to ensure that a throughput is greater than 25 Mbps, the target 2 is to ensure that a delay is less than 10 ms, first observation duration corresponding to the target 1 and the target 2 is 3 min, and a first range corresponding to the target 1 and the target 2 is 10%.

The first observation duration and/or the first range may be defined by the consumer entity, or may be determined by a producer based on historical experience. This is not limited.

The foregoing manner of defining that "the achieved value for the target of the intent is stable" is merely an example, and there may be another definition manner, provided that "the achieved value for the target of the intent is stable" means that the achieved value for the target of the intent does not change excessively within a period of time, and the achieved value is reliable, credible, or available.

If the achieved value for the target of the intent is stable, it means that the intent is stable. If the achieved value for the target of the intent is unstable, it means that the intent is unstable. Therefore, that "the achieved value for the target of the intent is stable" may also be described as "the intent is stable".

For a case in which the first observation duration and/or the first range may be defined by the consumer entity, the method 400 may further include step 403. Step 403 is as follows.

Optionally, in step 403, the consumer entity sends first information to the producer entity, and correspondingly, the producer entity receives the first information from the consumer entity. The first information indicates the first observation duration and/or the first range. It should be noted that the first information may further indicate other information used for determining whether the achieved value for the target of the intent is stable. This is not limited.

A manner in which the consumer entity sends the first information to the producer entity is not limited in embodiments of this application.

In a possible implementation, the consumer entity may send the first information to the producer entity as separate information.

In another possible implementation, the consumer entity may send a first message to the producer entity. The first message includes the first information.

A message type of the first message is not limited in embodiments of this application, and the first message may be any message related to intent management.

For example, the first message may be used for creating or requesting to create an intent. For example, the first message is an intent creation request message. When the first message is used for creating or requesting to create an intent, there are a plurality of manners in which the first message carries the first information. This is not limited. In a possible implementation, the first message may include the intent and the first information, and the intent may be represented as an instantiated intent IOC (as shown in FIG. 1). In another possible implementation, the first message may include the intent, the intent includes the first information, and the intent may be represented as an instantiated intent IOC (as shown in FIG. 1). For example, the intent IOC corresponding to the intent includes an intent expectation and an intent context, and the intent context includes the first information. For another example, the intent IOC corresponding to the intent includes an intent expectation, the intent expectation includes an expectation context, and the expectation context includes the first information. For another example, the intent IOC corresponding to the intent includes an intent expectation, the intent expectation includes an expectation target, the expectation target includes a target context, and the target context includes the first information. For a case in which the first message is used for creating or requesting to create an intent, after receiving the first message, the producer entity may create the intent based on the first message, and subsequently the producer entity may determine, based on the first information, whether an achieved value for a target of the intent is stable.

For example, the first message may be used for modifying or requesting to modify an intent. For example, the first message is an intent modification request message. When the first message is used for modifying or requesting to modify an intent, there are a plurality of manners in which the first message carries the first information. This is not limited. In a possible implementation, the first message may include an identifier of the intent and the first information. In another possible implementation, the first message may include an identifier of an intent expectation of the intent and the first information. In another possible implementation, the first message may include an identifier of an expectation target of the intent and the first information. In another possible implementation, if the first message implements a modification function by carrying a modified intent IOC, the first information may also be included in the intent IOC of the intent. For a case in which the first message is used for modifying or requesting to modify an intent, the producer entity may modify a created intent based on the first message, and subsequently the producer entity may determine, based on the first information, whether an achieved value for a target of a modified intent is stable.

For example, the first message may be a subscription request message. The subscription request message may be sent with the intent creation request message or the intent modification request message. In other words, the subscription request message is included in the intent creation request message or the intent modification request message. The subscription request message may be separately sent after the intent creation request message or the intent modification request message.

For example, the first message may be a query request message.

That the stable achieved value for the target of the intent fails to fulfil the target of the intent may be indicated by the intent report in a plurality of manners, for example, may be directly indicated by carrying a corresponding information element, or may be indirectly indicated.

For the direct indication manner, for example, the intent report may include fulfilment information of the target of the intent, the achieved value for the target of the intent, and stability information of the achieved value for the target of the intent. The fulfilment information of the target of the intent indicates that the target of the intent is not fulfilled, and the stability information of the achieved value for the target of the intent indicates whether the achieved value for the target of the intent is stable. In other words, in comparison with an existing intent report, the intent report in this embodiment of this application may additionally carry the stability information of the achieved value for the target of the intent. In the method 400, the stability information of the achieved value for the target of the intent indicates that the achieved value for the target of the intent is stable. The implementation of the intent report additionally carrying the stability information of the achieved value for the target of the intent is described in detail below with reference to FIG. 5.

For the indirect indication manner, for example, when the producer entity sends the intent report only when the stable achieved value for the target of the intent fails to fulfil the target of the intent, the intent report may include the fulfilment information of the target of the intent and the achieved value for the target of the intent. The intent report may indicate that the achieved value for the target of the intent is stable, or in other words, sending or receiving the intent report means that the achieved value for the target of the intent is stable.

There are a plurality of manners in which the producer entity is triggered to send the intent report.

In a possible implementation, the producer entity may periodically send the intent report to the consumer entity. In other words, when a reporting period arrives, the producer entity is triggered to send the intent report. The reporting period for reporting the intent report by the producer entity may be preconfigured or predefined, or may be determined by the producer based on historical experience, or may be provided by the consumer entity. This is not limited. For a case in which the consumer entity provides the reporting period for the producer entity, in a possible implementation, the consumer entity sends a subscription message to the producer entity. The subscription message includes period information, and the period information indicates a reporting period for the intent report.

In another possible implementation, the producer entity may send the intent report based on a request of the consumer entity. In comparison with periodically reporting the intent report, this manner helps reduce signaling overheads caused by reporting the intent report. In this case, the method 400 may further include step 404. Step 404 is as follows.

Optionally, in step 404, the consumer entity sends request information to the producer entity, and correspondingly, the producer entity receives the request information from the consumer entity.

The request information is used for requesting the producer entity to send the intent report. For example, the request information may include the intent or an identifier of the intent. The identifier of the intent is information that can uniquely determine the intent, for example, a name or a number (identifier (identifier, ID) or a distinguished name (distinguished name, DN)) of the intent.

A manner in which the consumer entity sends the request information to the producer entity is not limited in embodiments of this application.

In a possible implementation, the consumer entity may send the request information to the producer entity as separate information.

In another possible implementation, the consumer entity may send a second message to the producer entity. The second message includes the request information. A message type of the second message is not limited in embodiments of this application. The second message may be any message related to intent management. For example, the second message may be a message used for creating or requesting to create an intent (for example, the intent creation request message), a message used for modifying or requesting to modify an intent (for example, the intent modification request message), the subscription request message, or the query request message. For specific descriptions, refer to the first message.

Optionally, the request information may further include indication information. The indication information indicates to send the intent report when the stable achieved value for the target of the intent fails to fulfil the target of the intent. In other words, the consumer entity may require the producer entity to send the intent report to the consumer entity when the stable achieved value for the target of the intent fails to fulfil the target of the intent. The producer entity may not send the intent report to the consumer entity when the stable achieved value for the target of the intent fulfils the target of the intent, and/or when the achieved value for the target of the intent is unstable and the target of the intent fails to be fulfilled. In this case, the producer entity may send the intent report to the consumer entity based on the received indication information when determining that the stable achieved value for the target of the intent fails to fulfil the target of the intent. For a case in which the request information includes the indication information, the intent report may indicate that the achieved value for the target of the intent is stable, or in other words, sending or receiving the intent report means that the achieved value for the target of the intent is stable, or in other words, stability of the achieved value for the target of the intent is indirectly indicated by the intent report requested by using the request information sent by the consumer entity. In addition, if the intent report includes the achieved value for the target of the intent, the achieved value always remains stable.

In this embodiment of this application, the consumer entity may obtain the intent report from the producer entity in a subscription-based manner.

The subscription may be explicit subscription. For example, the consumer entity subscribes to the intent report by using a separate subscription request message. The subscription request message includes the indication information. A manner in which the subscription request message carries the indication information is not limited in embodiments of this application. For example, the subscription request message may include a subscription IOC (for example, NtfSubscriptionControl IOC), and the subscription IOC includes the indication information. For another example, the subscription request message directly includes the indication information.

The subscription may alternatively be an implicit subscription. For example, the indication information may be sent with another message related to intent management. For example, the indication information may be included in the intent creation request message or the intent modification request message. For example, the indication information is included in the intent creation request message. The intent creation request message may include the intent IOC and the indication information. Alternatively, the intent creation request message may include the intent, and the intent includes the indication information. For example, the indication information may be included in an intent context, an expectation context, or a target context. For example, the indication information is included in the intent modification request message. The intent modification request message may include an identifier of the intent and the indication information, an identifier of an intent expectation of the intent and the indication information, or an identifier of an expectation target of the intent and the indication information. Alternatively, the intent modification request message may include a modified intent, and the modified intent includes the indication information.

It should be noted that the request information and the first information may be sent by using a same message, or may be sent by using different messages. When the request information and the first information are sent by using the same message, the first message and the second message are a same message, and step 403 and step 404 are a same step.

Step 405: The consumer entity manages the intent based on the received intent report.

In a possible implementation, the consumer entity may modify or delete the intent based on the received intent report.

For example, the consumer entity may send a first request message to the producer entity based on the received intent report. The first request message is used for requesting the producer entity to delete the intent.

For example, the consumer entity may send a second request message to the producer entity based on the received intent report. The second request message is used for requesting the producer entity to modify the intent.

In a possible implementation, the intent report indicates that the target of the intent is not fulfilled and the stable achieved value for the target of the intent. The consumer entity may determine to modify the intent or delete the intent based on the stable achieved value for the target of the intent and an expected value for the target. The expected value for the target, that is, a target value, is a value that the consumer entity expects that a performance indicator related to the target can reach. For example, a performance assurance intent includes a target 1. The target 1 is to ensure that a throughput is greater than 25 Mbps, and an expected value for the throughput related to the target 1 is 25 Mbps. At a 30^{th} min, the throughput of the target 1 is 24.8 Mbps, and an achieved value for the target 1 is 24.8 Mbps at the 30^{th} min.

For example, when a difference between the stable achieved value for the target of the intent and the expected value for the target of the intent is greater than a first threshold, the consumer entity sends the first request message to the producer entity.

For example, a target 1 of a performance assurance intent is to ensure that a throughput is greater than 25 Mbps. During execution of the intent, the intent conflicts with another intent, and the producer entity immediately reports occurrence of the conflict and attempts to resolve the conflict by switching an action group. After all action groups for the intent are attempted, an achieved value for the target 1 is 5 Mbps, the target 1 of the intent is not fulfilled, and the achieved value for the target 1 of the intent is stable. The producer entity may send the intent report to the consumer entity, to report to the consumer entity that the target 1 of the intent is not fulfilled and the achieved value for the target 1 is 5 Mbps. Because a difference between 5 Mbps and an expected value 25 Mbps of the target is too large, the consumer entity considers that the intent cannot be achieved and can delete the intent.

For example, when a difference between the stable achieved value for the target of the intent and the expected value for the target of the intent is less than or equal to a first threshold, the consumer entity sends the second request message to the producer entity.

Modifying the intent includes one or more of the following operations: reducing the expected value that is for the target of the intent and that is not fulfilled, changing an action group for the intent, or increasing a priority of the intent. For example, when the stable achieved value for the target of the intent is close to the expected value for the target, the consumer entity may request to reduce the expected value for the target of the intent. For example, when there is a specific difference between the stable achieved value for the target of the intent and the expected value for the target, the consumer entity may request to change the action group for the intent or increase the priority of the intent.

For example, the intent report received by the consumer entity indicates that the target 1 of the intent is not fulfilled, and the achieved value for the target 1 of the intent is 24.8 Mbps. Because 24.8 Mbps is close to 25 Mbps, and the consumer entity may accept the achieved value, the consumer entity may reduce the target 1 to 24.8 Mbps.

For another example, the intent report received by the consumer entity indicates that the target 1 of the intent is not fulfilled, and the achieved value for the target 1 of the intent is 22 Mbps. Because there is a specific difference between 22 Mbps and 25 Mbps, the consumer entity may request to change the action group for the intent or increase the priority of the intent.

In the method 400, the producer entity may indicate to the consumer entity that the stable achieved value for the target of the intent fails to fulfil the target of the intent. The intent report indicates the stable achieved value for the target of the intent. In comparison with a conventional technology in which the intent report only indicates an achieved value for the target of the intent, the consumer entity may learn that the achieved value for the target of the intent is stable and reliable, and may select appropriate time to intervene in or manage execution of the intent based on the stable and reliable achieved value, to reduce a probability of incorrect determining, so as to reduce a waste of resources.

With reference to FIG. 5, the following describes an implementation in which the intent report additionally carries the stability information of the achieved value for the target of the intent.

FIG. 5 is a schematic flowchart of a method 500 for managing a network management intent according to this application.

The method shown in FIG. 5 may be executed by a producer entity and a consumer entity. Unless otherwise specified, the "producer entity" or the "consumer entity" may be the producer entity itself or the consumer entity itself, or may be an apparatus that can support the producer entity or the consumer entity in implementing a function of the producer entity or the consumer entity. For ease of description, the following uses the producer entity and the consumer entity for description. The method 500 may include at least a part of the following content.

Step 501: The producer entity monitors an achieved value for a target of the intent. For step 501, refer to step 401.

Step 502: The producer entity sends an intent report to the consumer entity, and accordingly, the consumer entity receives the intent report from the producer entity.

The intent report indicates that the achieved value for the target of the intent fails to fulfil the target of the intent, and stability information. The stability information indicates whether the achieved value for the target of the intent is stable. For example, the intent report may include fulfilment information, the achieved value for the target of the intent, and the stability information. The fulfilment information indicates whether the target of the intent is fulfilled. The fulfilment information may include one or more of fulfilment information of the intent, intent expectation fulfilment information of the intent, or target fulfilment information of the intent. For example, an intent achievement report includes only the fulfilment information of the intent. For another example, an intent achievement report includes only the target fulfilment information of the intent. For another example, an intent achievement report includes the fulfilment information of the intent, the intent expectation fulfilment information of the intent, and the target fulfilment information of the intent.

In this embodiment of this application, the consumer entity may add a stability attribute to an intent report IOC. Specifically, an intent report template configured by the consumer entity for the producer entity may specify that the intent report IOC includes the stability attribute. The stability attribute is used for describing whether the achieved value for the target of the intent is stable. In this way, when the producer entity determines the intent report based on the intent report IOC, in addition to indicating that the achieved value for the target of the intent fails to fulfil the target of the intent, the intent report may further indicate whether the achieved value for the target of the intent is stable.

An implementation in which the producer entity determines whether the achieved value for the target of the intent is stable is not limited in embodiments of this application. For detailed descriptions, refer to step 402. It should be noted that, when the consumer entity defines first observation duration and/or a first range for the producer entity to determine whether an action group for the intent has taken effect or determine whether the achieved value for the target of the intent is stable, the method 500 may further include step 503. Step 503 is as follows.

Optionally, in step 503, the consumer entity sends first information to the producer entity, and correspondingly, the producer entity receives the first information from the consumer entity. The first information indicates the first observation duration and/or the first range. It should be noted that the first information may further indicate other information used for determining whether the achieved value for the target of the intent is stable. This is not limited. For step 503, refer to step 403.

There are a plurality of manners in which the producer entity is triggered to send the intent report. For detailed descriptions, refer to step 403. It should be noted that when the producer entity sends the intent report based on a request of the consumer entity, the method 500 may further include step 504. Step 504 is as follows.

Optionally, in step 504, the consumer entity sends request information to the producer entity, and correspondingly, the producer entity receives the request information from the consumer entity. For step 504, refer to step 404. A difference is that the request information in step 504 does not include the indication information indicating to send the intent report when the stable achieved value for the target of the intent fails to fulfil the target of the intent. In this way, when the intent report is sent, the achieved value for the target of the intent may be stable or may not be stable, and this case may be indicated to the consumer entity by using the stability information in the intent report.

Step 505: The consumer entity manages the intent based on the received intent report.

In a possible implementation, the consumer entity managing the intent based on the received intent report includes: The consumer entity performs first management on the intent when the intent report indicates that the achieved value for the target of the intent fails to fulfil the target of the intent and the achieved value for the target of the intent is stable, where the first management includes intervention in execution of the intent; and/or, the consumer entity does not intervene in the execution of the intent when the intent report indicates that the achieved value for the target of the intent fails to fulfil the target of the intent and the achieved value for the target of the intent is unstable. In other words, when the achieved value for the target of the intent is stable, that is, the achieved value that is for the target of the intent and that is indicated by the intent report is stable and reliable, the consumer entity may intervene in the execution of the intent. When the achieved value for the target of the intent is unstable, that is, the achieved value that is for the target of the intent and that is indicated by the intent report is unreliable, to avoid incorrect determining, the consumer entity does not intervene in the execution of the intent.

When the intent report indicates that the achieved value for the target of the intent fails to fulfil the target of the intent and the achieved value for the target of the intent is stable, the consumer entity intervenes in the execution of the intent. For details, refer to the implementation in which the consumer entity manages the intent based on the received intent report in step 405. Details are not described again.

In the method 500, the producer entity may notify, by indicating stability information of the achieved value for the target of the intent in the intent report, the consumer entity of whether the achieved value for the target of the intent is stable and reliable, to assist the consumer entity in making a decision, help the consumer entity select appropriate time to intervene in or manage execution of the intent, so as to reduce a probability of incorrect determining made by the consumer entity and reduce a waste of resources.

In some other embodiments of this application, when the intent report indicates that the achieved value for the target of the intent fails to fulfil the target of the intent and the achieved value for the target of the intent is unstable, the intent report may further indicate predicted duration for the achieved value for the target of the intent to become stable. In this case, the method 500 may further include step 505. Step 505 is as follows.

Optionally, in step 505, the producer entity obtains the predicted duration for the achieved value for the target of the intent to become stable.

An implementation in which the producer entity obtains the predicted duration for the achieved value for the target of the intent to become stable is not limited in embodiments of this application.

In a possible implementation, the producer entity may obtain the predicted duration from a first network element. The first network element may estimate, based on at least one of the following information, predicted duration for an achieved value for an unstable target to become stable: latest statistical data of a network or a service performance indicator, historical experience (for example, predicted time based on experience), a current status of network resource utilization and availability, or a prediction result based on a network simulation system. For example, the first network element is a knowledge base or a digital twin system, or the first network element is a network element in which a knowledge base and/or a digital twin system are/is deployed.

Optionally, the method 500 may further include: After the achieved value for the target of the intent is stable, the producer entity updates, to the first network element, duration for the achieved value for the target to become stable, so that the duration is used as a reference for subsequently estimating the predicted duration for the achieved value for the target to become stable.

When the intent report further indicates the foregoing predicted duration, the consumer entity may reference, when managing the intent, the predicted duration for the achieved value for the target of the intent to become stable. In other words, the consumer entity may manage the intent based on the predicted duration for the achieved value for the target of the intent to become stable.

An implementation in which the consumer entity may manage the intent based on the predicted duration for the achieved value for the target of the intent to become stable is not limited in embodiments of this application. In a possible implementation, when the predicted duration is less than or equal to a duration threshold, the consumer entity does not intervene in execution of the intent; and/or when the predicted duration is greater than the duration threshold, the consumer entity may perform first management on the intent of the intent consumer entity. The first management includes intervention in execution of the intent. For details, refer to the implementation in which the consumer entity manages the intent based on the received intent report in step 405. Details are not described again.

It should be noted that, when the intent report indicates the predicted duration for the achieved value for the target of the intent to become stable, the intent report may explicitly indicate, by using the stability information, whether the achieved value for the target of the intent is stable, or may indirectly indicate, depending on whether predicted time is indicated, whether the achieved value for the target of the intent is stable. For example, if the intent report indicates the predicted time, it indicates that the achieved value for the target of the intent is unstable, and if the intent report does not indicate the predicted time, it indicates that the achieved value for the target of the intent is stable.

Based on the foregoing predicted time, the consumer entity may be assisted in further determining whether to wait. This helps reduce a probability of incorrect determining made by the consumer entity, to reduce a waste of resources.

The following uses an example in which a subscription message carries request information and the subscription request message is separately sent after an intent creation request message, to describe in detail a solution in which the consumer entity requests the producer entity to send the intent report when the stable achieved value for the target of the intent fails to fulfil the target of the intent in the method 400.

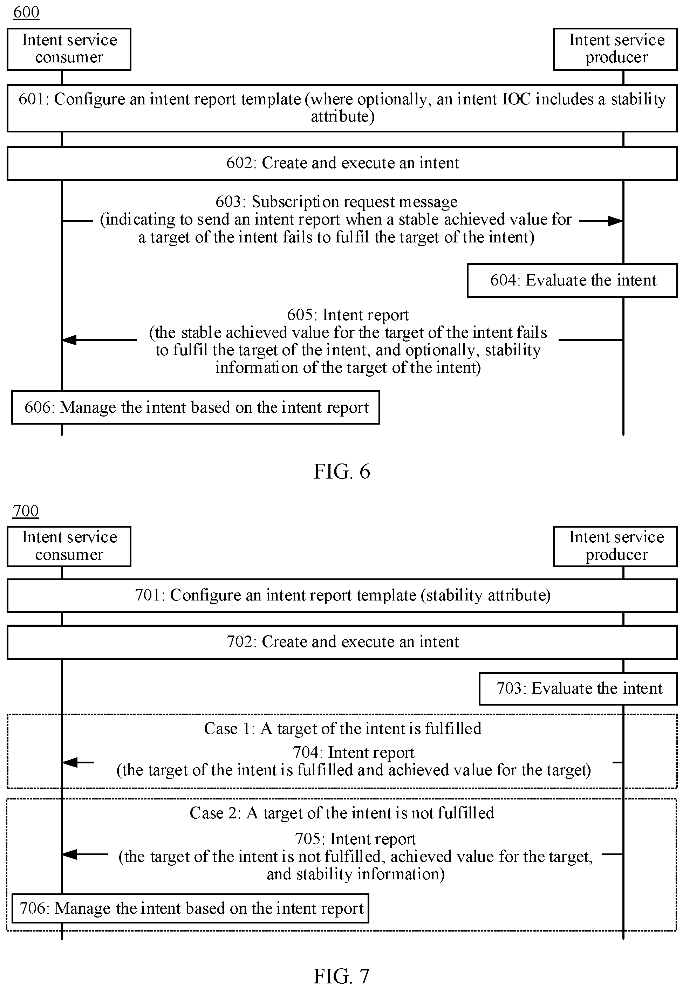

FIG. 6 is a schematic flowchart of a method 600 for managing a network management intent according to this application. In a solution in the method 600, a consumer entity is enabled to obtain, at the first time, information indicating that a target of an intent is not fulfilled and an achieved value for the target of the intent is stable. In the method 600, an "intent service consumer" may correspond to the foregoing consumer entity, and an "intent service producer" may correspond to the foregoing producer entity.

Step 601: The intent service consumer configures an intent report template for the intent service producer.

Optionally, the intent report template may specify that an intent report IOC includes a stability (stability) attribute.

The stability attribute is used for describing whether the intent is stable, and may include two states:
(1) Unstable (notStable): Before the intent service producer determines that an achieved value for a related target tends to become stable, the stability attribute remains "unstable". For example, the stability attribute remains "unstable" before the intent is not achieved and not all action groups for the intent are executed.
(2) Stable (Stable): When the intent service producer determines that an achieved value for a related target tends to become stable, the stability attribute changes to "stable". For example, when the intent is not achieved and all action groups for the intent are executed and take effect, the stability attribute changes to "stable".

For an unstable intent or a stable intent, refer to related descriptions of whether the achieved value for the target of the intent is stable in step 401. Details are not described herein again.

It should be noted that step 601 is performed during initial configuration.

Step 602: The intent service consumer requests the intent service producer to create the intent, and the intent service producer creates and executes the intent.

Specifically, the intent service consumer may send an intent creation request message to the intent service producer. The intent service producer may create the intent (that is, an intent instance) based on a request of the intent service consumer, and send an intent creation response message to the intent service consumer after the intent is created. Subsequently, the intent service producer may perform a feasibility check on the intent, and start to execute the intent after the feasibility check is passed. That the intent service producer executes the intent may be executing a network management task, a service management task, or a network management action group, for example, deploying or configuring a parameter. A performance assurance intent is used as an example. To ensure smooth running of an important video conference, high definition and smoothness of the video conference need to be ensured. A target 1 of the performance assurance intent is to ensure that a throughput is greater than 25 Mbps, and an evaluation period of an intent achievement status is 15 min. A network management task, a service management task, or a network management action group for the performance assurance intent may include changing a parameter of a base station, for example, reducing a quantity of physical downlink control channel (physical downlink control channel, PDCCH) symbols.

For example, the intent service consumer may be an information technology (information technology, IT) system developed by a customer, and the intent service producer may be a device network management system of a vendor, for example, a mobile bandwidth automation engine (mobile broadband automation engine, MAE).

Step 603: The intent service consumer sends a subscription request message to the intent service producer, and correspondingly, the intent service producer receives the subscription request message from the intent service consumer.

The subscription request message is used for subscribing to an intent report. The subscription request message includes indication information indicating the producer entity to send the intent report when a stable achieved value for the target of the intent fails to fulfil the target of the intent. In other words, the intent service consumer subscribes to the intent report sent by the intent service producer when the stable achieved value for the target of the intent fails to fulfil the target of the intent.

Step 604: The intent service producer evaluates the intent.

Specifically, the intent service producer continuously evaluates a fulfilment status of the target of the intent and a stability status of the achieved value for the target of the intent. For a manner in which the intent service producer evaluates the stability status of the achieved value for the target of the intent, refer to the manner in which the intent service producer determines whether the achieved value for the target of the intent is stable in step 402.

Step 605: If the intent service producer determines that the target of the intent is unfulfilled and the achieved value for the target of the intent is stable, the intent service producer sends the intent report to the intent service consumer, and correspondingly, the intent service consumer receives the intent report from the intent service producer.

The intent report indicates that the stable achieved value for the target of the intent fails to fulfil the target of the intent.

Optionally, the intent report further indicates stability information of the achieved value for the target of the intent. In this case, the stability information indicates that the achieved value for the target of the intent is stable. For example, when the intent report IOC includes the stability attribute, the intent report further includes the stability information of the achieved value for the target of the intent.

For example, to ensure smooth running of an important video conference, high definition and smoothness of the video conference need to be ensured. A target 1 of a performance assurance intent is to ensure that a throughput is greater than 25 Mbps. During execution of the intent, the intent conflicts with another intent, and the intent service producer immediately reports occurrence of the conflict and attempts to resolve the conflict by switching an action group. After all action groups for the intent are attempted, an achieved value for the target 1 is 24.8 Mbps, the target 1 of the intent is not fulfilled, and the achieved value for the target 1 is stable. The intent service producer may send the intent report to the intent service consumer, to report to the intent service consumer that the target 1 of the intent is not fulfilled, the achieved value for the target 1 is 24.8 Mbps, and the achieved value for the optional target 1 is stable.

Step 606: The intent service consumer manages the intent based on the received intent report.

For step 606, refer to step 405. Details are not described again.

In the method 600, the intent service consumer may require the intent service producer to send the intent report to the intent service consumer when the target of the intent is not fulfilled and the achieved value for the target of the intent is stable. In this case, the achieved value that is for the target of the intent and that is indicated by the intent report received by the intent service consumer always remains stable and reliable. The intent service consumer manages the intent based on the stable and reliable achieved value, to help select appropriate time to intervene in or manage execution of the intent, so as to reduce a probability of incorrect determining, to reduce a waste of resources.

The following uses an example in which the producer entity periodically reports the intent report to describe in detail a solution in which the intent report additionally carries the stability information of the achieved value for the target of the intent in the methods 400 and 500.

FIG. 7 is a schematic flowchart of a method 700 for managing a network management intent according to this application. In FIG. 7, an "intent service consumer" may correspond to the foregoing consumer entity, and an "intent service producer" may correspond to the foregoing producer entity. Related descriptions may be mutually quoted or referenced.

Step 701: The intent service consumer configures an intent report template for the intent service producer.

The intent report template may specify that an intent report IOC includes a stability attribute. For step 701, refer to step 601.

Step 702: The intent service consumer requests the intent service producer to create an intent, and the intent service producer creates and executes the intent.

For step 702, refer to step 602. A difference is that the intent creation request message sent by the intent service producer may carry a reporting period for the intent report. Certainly, the reporting period for the intent report may not be carried in the intent creation request message, but is provided to the intent service producer by using another message, for example, a subscription request message.

Step 703: The intent service producer evaluates the intent. For step 703, refer to step 604. Details are not described herein again.

Based on an intent evaluation result of the intent service producer, the following two cases may subsequently occur.

Case 1: A target of the intent is fulfilled, in other words, the intent is fulfilled.

In this case, step 704 may be performed. Step 704 is as follows.

Step 704: If the intent service producer determines that all targets of the intent are fulfilled, the intent service producer sends the intent report to the intent service consumer, and correspondingly, the intent service consumer receives the intent report from the intent service producer. The intent report indicates that an achieved value for the target of the intent fulfils the target of the intent. For example, the intent report includes fulfilment information and the achieved value for the target of the intent. The fulfilment information indicates that the target of the intent is fulfilled or the intent is fulfilled.

Case 2: The target of the intent is not fulfilled, in other words, the intent is not fulfilled.

In this case, step 705 and step 706 may be performed. Step 705 and step 706 are as follows.

Step 705: If the intent service producer determines that the target of the intent is not fulfilled, the intent service producer sends the intent report to the intent service consumer, and correspondingly, the intent service consumer receives the intent report from the intent service producer.

In addition to indicating that the achieved value for the target of the intent fails to fulfil the target of the intent, the intent report further indicates stability information of the achieved value for the target of the intent. The stability information indicates whether the achieved value for the target of the intent is stable.

For example, to ensure smooth running of an important video conference, high definition and smoothness of the video conference need to be ensured. A target 1 of a performance assurance intent is to ensure that a throughput is greater than 25 Mbps. The intent service producer periodically (for example, every 15 min) reports the intent report to the intent service consumer. Before an action group for the intent is executed, an intent evaluation result is that the target 1 of the intent is not fulfilled and an achieved value for the target 1 of the intent is stable, the intent report reported by the intent service producer indicates that the target 1 of the intent is not fulfilled, the achieved value for the target 1, and that the achieved value for the target 1 is unstable. When a reporting period arrives after the action group for the intent is executed and takes effect, the intent evaluation result is that the target 1 of the intent is not fulfilled, the achieved value for the target 1 is 24.8 Mbps, and the achieved value for the target 1 is stable. The intent report reported by the intent service producer to the intent service consumer indicates that the target 1 of the intent is not fulfilled, the achieved value for the target 1 is 24.8 Mbps, and the achieved value for the target 1 is stable.

Step 706: The intent service consumer manages the intent based on the intent report.

For step 706, refer to step 505. Details are not described again.

In the method 700, the stability attribute may be added to the intent report template to describe whether the achieved value for the target of the intent is stable. When the target of the intent is not fulfilled, the reported intent report may indicate the stability information of the achieved value for the target of the intent, so that the intent service consumer learns whether the achieved value that is for the target and that is indicated by the intent report is stable and reliable. Based on this, the consumer entity makes a decision, to help the consumer entity select appropriate time to intervene in or manage execution of the intent, so as to reduce a probability of incorrect determining, and reduce a waste of resources while increasing a probability of fulfilling the intent.

The following uses an example in which the producer entity periodically reports the intent report to describe in detail a solution in which the intent report additionally carries the stability information of the achieved value for the target of the intent and the predicted duration for the achieved value for the target of the intent to become stable in the method 500.

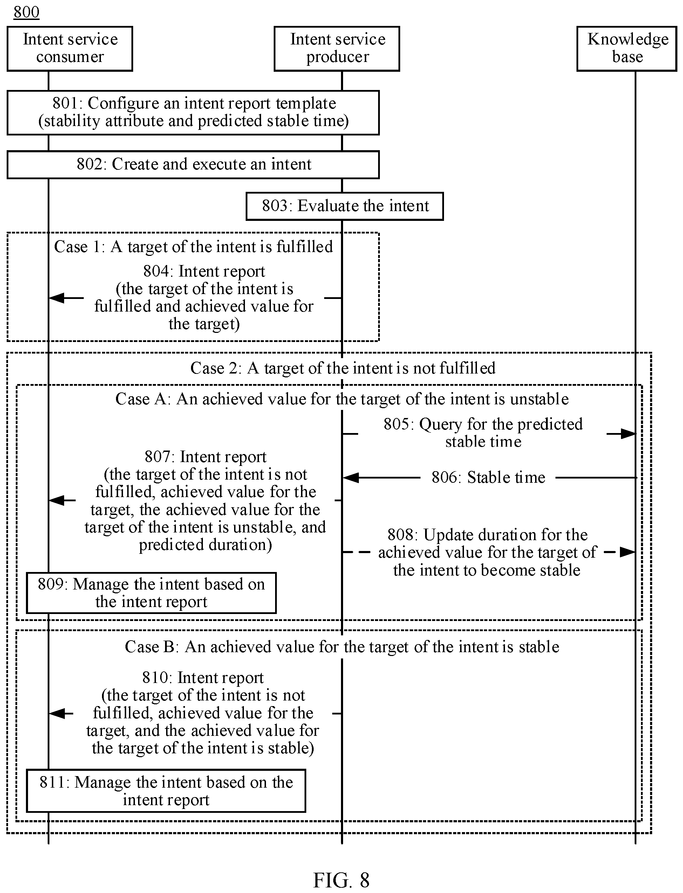

FIG. 8 is a schematic flowchart of a method 800 for managing a network management intent according to this application. In FIG. 8, "predicted stable time" may correspond to the "predicted time" in the method 500, an "intent service consumer" may correspond to the foregoing consumer entity, and an "intent service producer" may correspond to the foregoing producer entity. Related descriptions may be mutually quoted or referenced. FIG. 8 uses an example in which the intent service producer obtains the predicted time from a knowledge base.

Step 801: The intent service consumer configures an intent report template for the intent service producer.

The intent report template may specify that an intent report IOC includes a stability attribute and the predicted stable time (predictStableTime). The stability attribute is used for describing whether an achieved value for a target of an intent is stable. For descriptions of the stability attribute, refer to step 601. The predicted stable time is used for describing predicted time at which the stability attribute of the achieved value for the target of the intent becomes stable.

It should be noted that step 801 is performed during initial configuration.

Step 802: The intent service consumer requests the intent service producer to create the intent, and the intent service producer creates and executes the intent.

For step 802, refer to step 602. A difference is that the intent creation request message sent by the intent service producer may carry a reporting period for the intent report. Certainly, the reporting period for the intent report may not be carried in the intent creation request message, but is provided to the intent service producer by using another message, for example, a subscription request message.

Step 803: The intent service producer evaluates the intent. For step 803, refer to step 604.

Based on an intent evaluation result of the intent service producer, the following two cases may subsequently occur.

Case 1: The target of the intent is fulfilled.

In this case, step 804 may be performed. Step 804 is as follows.

Step 804: If the intent service producer determines that all targets of the intent are fulfilled, the intent service producer sends the intent report to the intent service consumer, and correspondingly, the intent service consumer receives the intent report from the intent service producer. The intent report indicates that an achieved value for the target of the intent fulfils the target of the intent. For example, the intent report includes fulfilment information and the achieved value for the target of the intent. The fulfilment information indicates that the target of the intent is fulfilled or the intent is fulfilled.

Case 2: The target of the intent is not fulfilled.

Case 2 may be further classified into Case A and Case B depending on whether the achieved value for the target of the intent is stable.

Case A: The achieved value for the target of the intent is unstable.

In Case A, step 805 to step 809 may be performed. Step 805 to step 809 are as follows.

Step 805: The intent service producer queries the knowledge base for the predicted stable time.

For example, the intent service producer may query the knowledge base for predicted time at which a current action group for the intent is executed and takes effect.

Step 806: The knowledge base sends the predicted stable time to the intent service producer.

For a manner in which the knowledge base estimates the predicted stable time, refer to descriptions in step 505. Details are not described herein again.

Step 807: The intent service producer sends the intent report to the intent service consumer, and correspondingly, the intent service consumer receives the intent report from the intent service producer.

In addition to indicating that the achieved value for the target of the intent fails to fulfil the target of the intent, the intent report further indicates stability information of the achieved value for the target of the intent and the predicted stable time. The stability information indicates that the achieved value for the target of the intent is unstable.

For example, with reference to FIG. 3, in the example shown in FIG. 3, a target of an intent is to ensure that an average downlink throughput is greater than 25 Mbps, and a reporting period for an intent report is 15 min. An intent conflict occurs during execution of the intent. At a 7^{th} min, the intent service producer determines that the target of the intent is not fulfilled, and switches a network management task, a service management task, or an action group for the first time. When a first reporting period (that is, a 15^{th} min) arrives, the intent is still in a new intent effective period after the network management task, the service management task, or the action group is switched for the first time. Therefore, at the 15^{th} min, the intent report reported by the intent service producer indicates that the target of the intent is not fulfilled, an achieved value for the target of the intent is 23 Mbps, the achieved value for the target of the intent is unstable, and predicted stable time is 37 min. At a 23^{rd} min, the intent service producer determines that the target of the intent is not fulfilled, and switches the network management task, the service management task, or the action group for the second time. When a second reporting period (that is, a 30^{th} min) arrives, the intent is still in a new intent effective period after the network management task, the service management task, or the action group is switched for the second time. Therefore, at the 30^{th} min, the intent report reported by the intent service producer indicates that the target of the intent is not fulfilled, the achieved value for the target of the intent is 24 Mbps, the achieved value for the target of the intent is unstable, and the predicted stable time is 7 min.

Optionally, in step 808, after subsequently detecting that the achieved value for the target of the intent is stable, the intent service producer updates stable time to the knowledge base. The stable time is time at which the achieved value for the target of the intent becomes stable.

For example, the intent service producer may update, to the knowledge base, time at which a current action group for the intent is executed and takes effect.

Step 809: The intent service consumer manages the intent based on the intent report.

For step 809, refer to related descriptions in step 505 in the method 500. Details are not described again.

Case B: The achieved value for the target of the intent is stable.

In Case B, step 810 and step 811 may be performed. Step 810 and step 811 are as follows.

Step 810: The intent service producer sends the intent report to the intent service consumer, and correspondingly, the intent service consumer receives the intent report from the intent service producer. In addition to indicating that the achieved value for the target of the intent fails to fulfil the target of the intent, the intent report further indicates stability information of the achieved value for the target of the intent. The stability information indicates that the achieved value for the target of the intent is stable.

For example, with reference to the example in step 807, when a third reporting period (that is, a 45^{th} min) arrives, the network management task, the service management task, or the action group that is switched for the second time is executed and takes effect. Therefore, at the 45^{th} min, the intent report reported by the intent service producer indicates that the target of the intent is not fulfilled, the achieved value for the target of the intent is 24.8 Mbps, and the achieved value for the target of the intent is stable.

Step 811: The intent service consumer manages the intent based on the intent report.

For step 811, refer to related descriptions of step 505. Details are not described again.

In the method 800, the stability attribute and the predicted stable time may be added to the report template. The stability attribute is used for describing whether the achieved value for the target of the intent is stable. The predicted stable time is used for describing the predicted time at which the stability attribute of the achieved value for the target of the intent becomes stable. When the target of the intent is not fulfilled, the reported intent report may indicate stability of the target of the intent and the predicted stable time. The stability may enable the intent service consumer to learn whether the achieved value that is for the target and that is indicated by the intent report is stable and reliable. The predicted stable time may enable the intent service consumer to further determine whether to wait. The two attributes may assist the intent service consumer in making a decision, and help select appropriate time to intervene in or manage execution of the intent. This helps reduce a probability of incorrect determining made by the intent service consumer, to reduce a waste of resources.

The following uses an example in which the producer entity periodically reports the intent report to describe in detail a solution in which the intent report additionally carries the stability information of the achieved value for the target of the intent, and the intent creation request message carries the first observation duration and/or the first range in the methods 400 and 500.

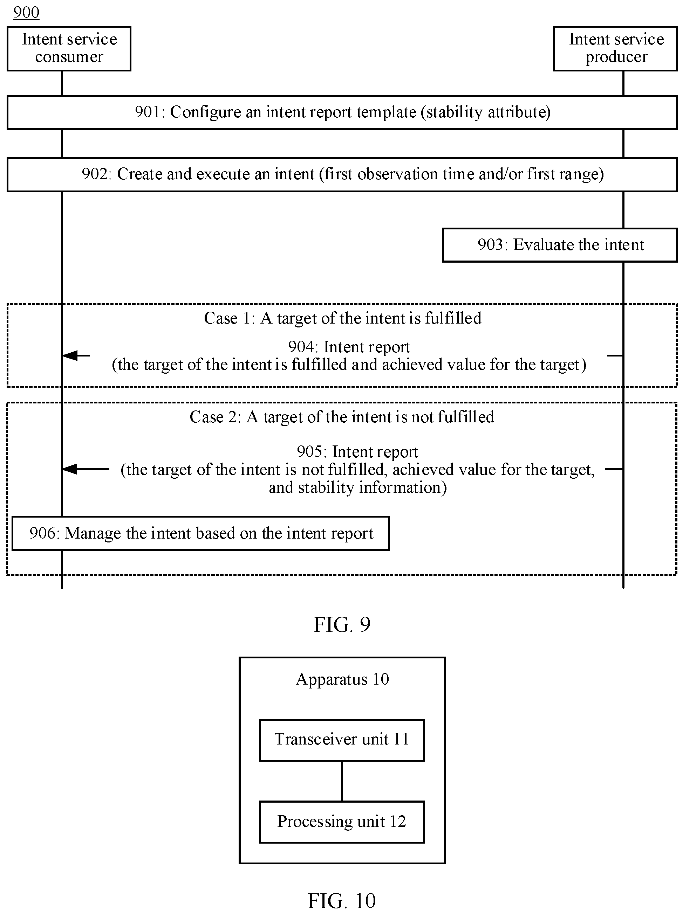

FIG. 9 is a schematic flowchart of a method 900 for managing a network management intent according to this application. In FIG. 9, stable observation duration may correspond to the first observation duration in the methods 400 and 500, and a stable degree may correspond to the first range in the methods 400 and 500.

Step 901: An intent service consumer configures an intent report template for an intent service producer.

The intent report template may specify that an intent report IOC includes a stability attribute.

For step 901, refer to step 601.

Step 902: The intent service consumer requests the intent service producer to create an intent, and the intent service producer creates and executes the intent.

For step 902, refer to step 602. A difference is that the intent creation request message sent by the intent service consumer includes a reporting period for an intent report, the stable observation duration (stableObservationDuration), and the stable degree (stableDegree). The stable observation duration is observation duration needed to determine whether an achieved value for a target of the intent is stable. The stable degree is a fluctuation range that needs to be satisfied for the achieved value for the target of the intent to be stable, or may be described as a fluctuation range that needs to be satisfied for a related performance indicator of the target of the intent to be stable. Certainly, the reporting period for the intent report may not be carried in the intent creation request message, but is provided to the intent service producer by using another message, for example, a subscription request message.

A performance assurance intent is used as an example. To ensure smooth running of an important video conference, high definition and smoothness of the video conference need to be ensured. A target 1 of the performance assurance intent is to ensure that a throughput is greater than 25 Mbps, a reporting period for an intent report is 15 min, stable observation duration is 3 min, and stable degree is 10%.

When the intent creation request message carries the stable observation duration and the stable degree, the achieved value for the target of the intent creation request is determined as stable only when a fluctuation range of the achieved value for the target of the intent remains within the stable degree in the stable observation duration.

Step 903: The intent service producer evaluates the intent.

Specifically, the intent service producer continuously evaluates a fulfilment status of the target of the intent and a stability status of the achieved value for the target of the intent. For a manner in which the intent service producer evaluates the stability status of the achieved value for the target of the intent, refer to the manner in which the intent service producer determines whether the achieved value for the target of the intent is stable in step 402. Stable observation duration and/or stable degree used during evaluation are/is obtained in step 902.

For example, with reference to the example in step 902, the intent service producer continuously determines whether a fluctuation range of the throughput in past 3 min remains within 10%. If the fluctuation range of the throughput remains within 10%, it is determined that an achieved value for the target 1 is stable. If the fluctuation range of the throughput is out of 10%, it is determined that an achieved value for the target 1 is unstable.

For step 904 to step 906, refer to step 704 to step 706. Details are not described again.

In the method 900, the stable observation duration and the stable degree may be added to an intent IOC, so that the intent service consumer can customize an indicator for measuring whether the achieved value for the target of the intent is stable. In this way, stability information reported by the intent service producer better satisfies an expectation of the intent service consumer, and can better assist the intent service consumer in making a decision, and help select appropriate time to intervene in or manage execution of the intent, to reduce a probability of incorrect determining made by the intent service consumer, so as to reduce a waste of resources.

The foregoing describes in detail method embodiments provided in this application with reference to FIG. 4 to FIG. 9. The following describes apparatus embodiments of this application with reference to FIG. 10 to FIG. 12.

It may be understood that, to implement functions in the foregoing embodiments, apparatuses in FIG. 10 to FIG. 12 include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software.

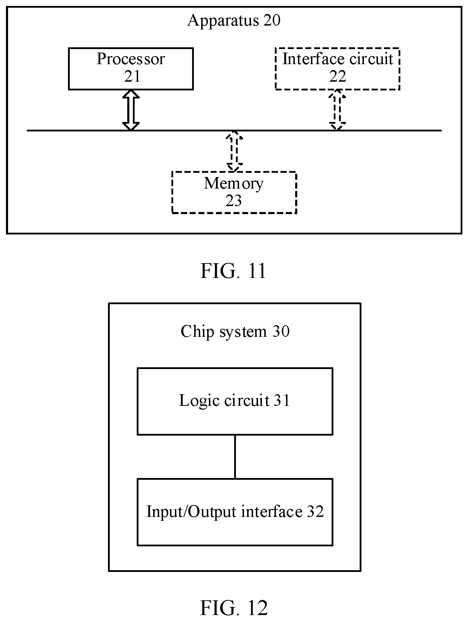

FIG. 10 and FIG. 11 are diagrams of structures of possible apparatuses according to embodiments of this application. These apparatuses may be configured to implement functions of the producer entity or the consumer entity in the foregoing method embodiments, and therefore can also implement beneficial effects of the foregoing method embodiments.

As shown in FIG. 10, an apparatus 10 includes a transceiver unit 11 and a processing unit 12.

When the apparatus 10 is configured to implement a function of the producer entity in the foregoing method embodiments, the transceiver unit 11 is configured to perform sending and receiving steps of the producer entity, for example, step 402, 403, 404, 502, 503, 504, 603, 605, 607, 704, 705, 804, 805, 806, 807, 808, 810, 904, or 905. The processing unit 12 is configured to perform processing steps of the producer entity, for example, step 401, 501, 505, 601, 602, 604, 701, 702, 703, 801, 802, 803, 901, 902, or 903. When the apparatus 10 is configured to implement a function of the consumer entity in the foregoing method embodiments, the transceiver unit 11 is configured to perform receiving and sending steps of the consumer entity, for example, step 402, 403, 404, 502, 503, 504, 603, 605, 704, 705, 804, 807, 810, 904, or 905. The processing unit 12 is configured to perform processing steps of the consumer entity, for example, step 405, 505, 601, 602, 606, 701, 702, 706, 801, 802, 809, 811, 901, 902, or 906.

For more detailed descriptions of the transceiver unit 11 and the processing unit 12, refer to related descriptions in the foregoing method embodiments. Details are not described herein.

As shown in FIG. 11, an apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in the producer entity or the consumer entity, the chip implements the function of the producer entity or the consumer entity in the foregoing method embodiments. The chip receives information from another module (for example, a radio frequency module or an antenna) in the producer entity or the consumer entity, where the information is sent by another apparatus to the producer entity or the consumer entity; or the chip sends information to another module (for example, a radio frequency module or an antenna) in the producer entity or the consumer entity, where the information is sent by the producer entity or the consumer entity to another apparatus.

FIG. 12 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the producer entity or the consumer entity in the foregoing method embodiments.

For example, the logic circuit 31 is configured to implement processing-related operations performed by the producer entity or the consumer entity in the foregoing method embodiments; and the input/output interface 32 is configured to implement sending-and/or receiving-related operations performed by the producer entity or the consumer entity in the foregoing method embodiments.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions. The processor is configured to execute the computer program or the instructions stored in the memory, to implement the method performed by the producer entity or the consumer entity in the foregoing method embodiments.

This application further provides a computer-readable storage medium. The computer-readable storage medium stores computer instructions used for implementing the method performed by the producer entity or the consumer entity in the foregoing method embodiments.

This application further provides a computer program product, including instructions. When the instructions are executed by a computer, the method performed by the producer entity or the consumer entity in the foregoing method embodiments is implemented.

This application further provides a communication system. The communication system includes at least one of a producer entity, a consumer entity, a knowledge base, or a digital twin system in the foregoing embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a producer entity or a consumer entity. Certainly, the processor and the storage medium may alternatively exist in the producer entity or the consumer entity as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a dedicated computer, a computer network, a network equipment, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A method for managing a network management intent, wherein the method comprises:
receiving an intent report from a producer entity, wherein the intent report indicates that a stable achieved value for a target of a network management intent fails to fulfil the target of the network management intent; and
managing the network management intent based on the intent report.

2. The method according to claim 1, wherein the method further comprises:
sending request information to the producer entity, wherein the request information is used for requesting the producer entity to send the intent report.

3. The method according to claim 2, wherein sending the request information to the producer entity comprises:
sending a subscription request message to the producer entity, wherein the subscription request message comprises the request information.

4. The method according to claim 2 or 3, wherein
the request information comprises the network management intent or an identifier of the network management intent.

5. The method according to any one of claims 2 to 4, wherein
the request information comprises indication information, and the indication information indicates to send the intent report when the stable achieved value for the target of the network management intent fails to fulfil the target of the network management intent.

6. The method according to any one of claims 1 to 5, wherein the stable achieved value comprises:
an achieved value for the target of the network management intent upon all action groups for the network management intent having taken effect, wherein the action group comprises one or more actions for managing a managed entity of the network management intent; or
an achieved value for the target of the network management intent upon a performance indicator value of a managed entity of the network management intent remaining within a first range in first observation duration.

7. The method according to any one of claims 1 to 6, wherein the method further comprises:
sending first information to the producer entity, wherein the first information indicates the first observation duration and/or the first range; and
the first observation duration is observation duration needed to determine that the achieved value for the target of the network management intent is stable, and the first range is a fluctuation range that needs to be satisfied for the achieved value for the target of the network management intent to be stable.

8. The method according to any one of claims 1 to 7, wherein managing the network management intent based on the intent report comprises:
sending a first request message to the producer entity, wherein the first request message is used for requesting the producer entity to delete the network management intent; or
sending a second request message to the producer entity, wherein the second request message is used for requesting the producer entity to modify the network management intent, and modifying the network management intent comprises one or more of the following operations: reducing an expected value for an unfulfilled target of the network management intent, changing an action group for the network management intent, or increasing a priority of the network management intent.

9. A method for managing a network management intent, wherein the method comprises:
monitoring an achieved value for a target of a network management intent; and
sending an intent report to a consumer entity, wherein the intent report indicates that a stable achieved value for the target of the network management intent fails to fulfil the target of the network management intent.

10. The method according to claim 9, wherein the method further comprises:
receiving request information from the consumer entity, wherein the request information is used for requesting the intent report.

11. The method according to claim 10, wherein receiving the request information from the consumer entity comprises:
receiving a subscription request message from the consumer entity, wherein the subscription request message comprises the request information.

12. The method according to claim 10 or 11, wherein
the request information comprises the network management intent or an identifier of the network management intent.

13. The method according to any one of claims 10 to 12, wherein
the request information comprises indication information, and the indication information indicates to send the intent report when the stable achieved value for the target of the network management intent fails to fulfil the target of the network management intent.

14. The method according to any one of claims 9 to 13, wherein the method further comprises:
determining that the achieved value for the target of the network management intent is stable.

15. The method according to claim 14, wherein determining that the achieved value for the target of the network management intent is stable comprises:
determining that all action groups for the network management intent have taken effect, wherein the action group comprises one or more actions for managing a managed entity of the network management intent; or
determining that a performance indicator value of a managed entity of the network management intent remains within a first range in first observation duration.

16. The method according to any one of claims 9 to 15, wherein the method further comprises:
receiving first information from the consumer entity, wherein the first information indicates the first observation duration and/or the first range; and
the first observation duration is observation duration needed to determine that the achieved value for the target of the network management intent is stable, and the first range is a fluctuation range that needs to be satisfied for the achieved value for the target of the network management intent to be stable.

17. A method for managing a network management intent, wherein the method comprises:
monitoring, by a producer entity, an achieved value for a target of a network management intent;
sending, by the producer entity, an intent report, and receiving, by a consumer entity, the intent report, wherein the intent report indicates that a stable achieved value for the target of the network management intent fails to fulfil the target of the network management intent; and
managing, by the consumer entity, the network management intent based on the intent report.

18. The method according to claim 17, wherein the method further comprises:
sending, by the consumer entity, request information, and receiving, by the producer entity, the request information, wherein the request information is used for requesting the intent report.

19. An apparatus for managing a network management intent, wherein the apparatus comprises a transceiver unit and a processing unit, wherein
the transceiver unit is configured to receive an intent report, wherein the intent report indicates that a stable achieved value for a target of a network management intent fails to fulfil the target of the network management intent; and
the processing unit is configured to manage the network management intent based on the intent report.

20. An apparatus for managing a network management intent, wherein the apparatus comprises a transceiver unit and a processing unit, wherein
the processing unit is configured to monitor an achieved value for a target of a network management intent; and
the transceiver unit is configured to send an intent report, wherein the intent report indicates that a stable achieved value for the target of the network management intent fails to fulfil the target of the network management intent.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 18 by using a logic circuit or by executing code instructions.

22. The communication apparatus according to claim 21, wherein the communication apparatus is a chip or a chip system.

23. A computer-readable storage medium, wherein the storage medium stores a computer program or instructions, and when the computer program or the instructions are executed by a communication apparatus, the method according to any one of claims 1 to 18 is implemented.

24. A communication system, comprising a communication apparatus configured to perform the method according to any one of claims 1 to 8 and a communication apparatus configured to perform the method according to any one of claims 9 to 16.
